(19) Europäisches Patentamt
European Patent Office
Office européen des brevets

(11) **EP 4 120 132 A1**

(12) **EUROPEAN PATENT APPLICATION**

(43) Date of publication:
**18.01.2023 Bulletin 2023/03**

(51) International Patent Classification (IPC):
***G06K 9/62*** *(2022.01)*

(21) Application number: **21185912.9**

(52) Cooperative Patent Classification (CPC):
**G06K 9/6219; G06K 9/6256; G06K 9/6265**

(22) Date of filing: **15.07.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA
Toyota-shi, Aichi-ken 471-8571 (JP)**
• **Max-Planck-Institut für Informatik
66123 Saarbrücken (DE)**

(72) Inventors:
• **OLMEDA REINO, Daniel
1140 Brussels (JP)**
• **REZAEIANARAN, Farzaneh
66123 Saarbrücken (DE)**
• **SHETTY, Rakshith
66123 Saarbrücken (DE)**
• **ZHANG, Shanshan
66123 Saarbrücken (DE)**
• **SCHIELE, Bernt
66123 Saarbrücken (DE)**

(74) Representative: **Cabinet Beau de Loménie
158, rue de l'Université
75340 Paris Cedex 07 (FR)**

(54) **METHOD AND SYSTEM FOR DETECTING OBJECTS IN IMAGES**

(57) A computer-implemented method for training a detection model according to unsupervised domain adaptation approach, said method comprising a set of steps performed for each image of at least one pair of images, the images of a pair respectively belonging to a source domain and a target domain. Said set of steps associated with an image comprises:
- obtaining (E10) one or more object proposals and feature vectors for said image,
- clustering (E20) the obtained object proposals by executing a clustering algorithm,
- determining (E30), for each obtained cluster, a quantity representative of the feature vectors respectively associated with the object proposals belonging to said cluster.

The method also comprises a step of learning (E40) a domain discriminator using adversarial training, so as to align between the source and target domains the quantities determined for each pair.

FIG. 4

EP 4 120 132 A1

## Description

Field of the disclosure

The present invention relates to the general field of computer vision. It relates more specifically to a method for training a detection model according to unsupervised domain adaptation approach and to a method for detecting objects in images using a detection model trained accordingly. The invention also relates to a system configured to perform said training method and to a system configured to perform said detection method.

Description of the Related Art

Convolutional neural networks based methods achieve excellent results in large-scale supervised learning problems, where a lot of labelled data exists. Moreover, these features are quite general and can be used in a variety of vision problems, such as image captioning, object detection and segmentation.

However, direct transfer of features from different domains does not work very well in practice, as the data distributions of domains might change. In computer vision, this problem is sometimes referred to as domain shift.

Until recently, the most commonly used approach to transfer learned features was to further modify them through a process called "fine-tuning". In this case, the features are adapted by training the network with labelled samples from the new data distribution.

In many cases, however, acquiring labelled data can be expensive. Unsupervised Domain Adaption approach (referred to as "UDA" thereafter) deals with the domain shift problem without the need to constantly annotate new data. More particularly, an important idea of UDA approach is to learn representations that are invariant to domains with different data distributions. Hence, in this scenario, a computer system has access to a labelled dataset (called "source domain") and an unlabelled one (with a similar but different data distribution, called "target domain"), and the objective is to correctly infer the labels on the latter.

Implementations of the UDA approach are generally based on deep learning methods and consist of two steps: (i) learn features that preserve a low risk on labelled samples (source domain) and (ii) make the features from both domains to be as indistinguishable as possible, so that a classifier trained on the source can also be applied on the target domain.

UDA approach is of particular interest in that it can be used to train models with synthetic data (e.g. 3D renders or game engines). Indeed, assuming the domain shift problem can be handled, it can be made use of virtually unlimited number of labelled (synthetic) images and adapt the model to natural images. This is a very valuable aspect since acquiring training samples may be a very expensive task in certain areas of research, such as robotics vision or reinforcement learning. Hence, training in a synthetic domain and transferring the learned features to real-world environments can be a solution to alleviate the high cost of acquiring and labelling training data.

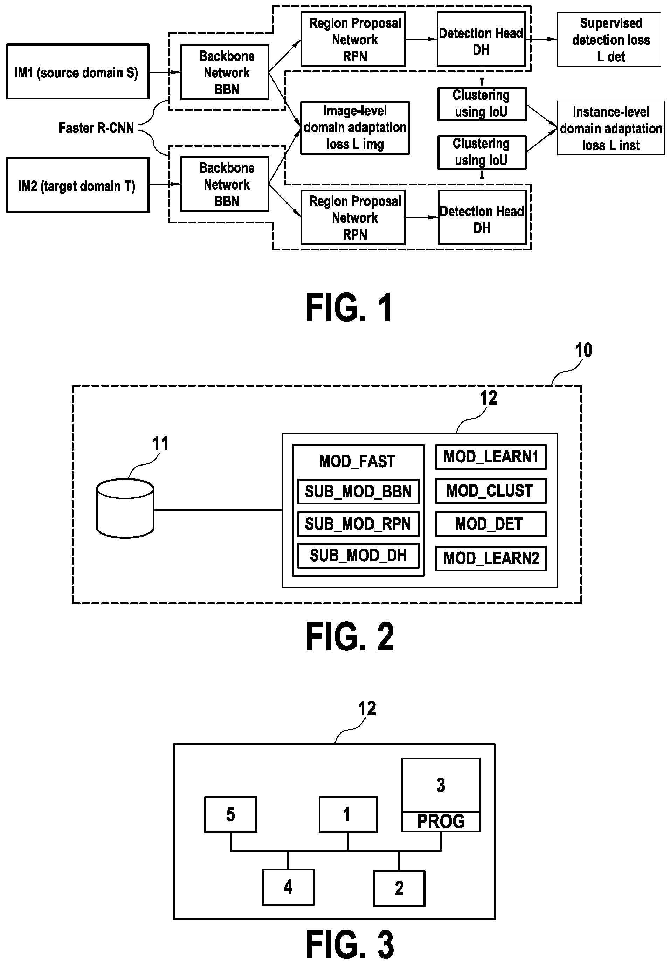

Figure 1 illustrates a functional architecture configured to train a network according to a general UDA approach, said network being intended for object detection.

As shown in Figure 1, a pair of two images is considered, namely a first image IM1 belonging to a source domain S and a second image IM2 belonging to a target domain T. In this example, it is considered that the visual distribution of the first image IM1 is a synthetic image captured in a video game where a player controls a vehicle moving on a road. The visual distribution of the second image IM2, as for it, is derived from a shot of a real road environment in an urban area.

Therefore, both images IM1, IM2 have distinct visual distributions. However, and in accordance with the principle of the UDA approach, both images IM1, IM2 share a same label space for objects (e.g. instances) included in said images. Examples of objects that might be detected are cars, pedestrians, etc.

Moreover, as both images IM1, IM2 form a batch used to train a model implementing said UDA approach, only the first image IM1 is annotated before training the model. The purpose of this training is to align the respective representations of said source S and target T domains, and thus to allow inferring class labels for the second image IM2.

The various components used to implement the UDA approach include a detection neural network, e.g. a Faster R-CNN convolution network as shown in Figure 1. Said Faster R-CNN network is an object detection network which takes an input image IM1, IM2 and produces region proposals for the image as well as a label for every object instance present in the image. Practically speaking, Faster R-CNN is a two-staged detector: first, utilizing the features from a backbone network BBN (i.e. a network configured to perform features extraction, so as to obtain feature vectors), a Region Proposal Network RPN predicts region proposals (example: bounding boxes) for candidate objects, referred to as "object proposals" hereafter. In the next stage, a detection head DH (known as a region-of-interest detection network) refines the delimitation of each objet proposal and predicts the class label.

The implementation of a Faster R-CNN type convolution network is known to the man skilled in the art. For more details, reference [1] can be consulted.

As shown in Figure 1, implementation of UDA approach model also comprises a learning stage which aims at minimizing the label prediction loss on the annotated part (i.e. images from the source domain S). Consequently, parameters of both the Region Proposal Network RPN and the detection head DH are thus optimized in order to minimize the empirical loss L_det (i.e. the supervised detection loss) for the source domain samples.

Implementation of UDA approach further comprises:

- another learning stage which aims at optimizing the image-level domain adaption loss L_img so as to induce alignment of the global image representation in the backbone network BBN (i.e. image-level features output by the backbone network BBN are aligned between domains), and/or
- another learning stage which aims at optimizing the instance-level domain adaption loss L_inst so as to induce alignment of representation of each objet instance. It should be noted that this learning stage is fed with object proposals, possibly after the proposals from a domain have been grouped so as to form clusters. Moreover, the clustering procedure may or may not take into account the (pseudo) labels determined by the detection head DH.

Both image-level domain adaption loss L_img and instance-level domain adaption loss L_inst are taken into consideration in Figure 1. As a result, if losses L_img and L_dist are both taken into account, the overall training objective L of a UDA approach may be formulated as:

$$L = L\_det + \lambda\ (L\_img + L\_dist)$$

where $\lambda$ is a trade-off parameter. Of course, if only one of said two losses L_img and L_dist is taken into account, the previous formula is adapted accordingly.

The elements described with reference to Figure 1 constitute the general framework for implementing the UDA approach. Starting from this general framework, different variants can be implemented by making design choices. In particular, two design choices may be considered as important: a first choice concerning the training method to be implemented with respect to the optimization of the losses related to the domain adaptation (L_img and/or L_inst), and a second choice concerning the nature of the features (whole image and/or object instances) for which alignment is sought

As for the first design choice, adversarial training has long been the dominant paradigm for reducing the discrepancy between feature distributions (see reference [2]). The key idea in adversarial training based UDA approach is to learn domain invariant representations by fooling a discriminator (i.e. a discriminative classifier) which tries to predict the domain based on detector features. This approach is usually class-agnostic, ignoring the class the features come from and focusing on domain-level alignment.

Most recently, max-margin contrastive losses have also been proposed to align source and target features (see reference [3]). Main idea here is to push features from the same class closer and push apart features belonging to different classes across domains.

As for the second design choice, early work (see reference [2]) proposed aligning features at two-levels as described with reference to Figure 1: 1) on image-level features output by the backbone network BBN and 2) on instance-level features obtained after pooling each region-of-interest proposed by the RPN network. Two discriminators, one image-level and one instance-level are used to yield the adversarial loss terms L_img and L_inst.

However, even if the predominant approach aims for complete alignment at instance-level, i.e. representation of every object proposed on source or target domain should be domain agnostic, complete alignment is challenging for the model, especially when the data contains some domain-specific outliers, e.g. specific backgrounds only found in a simulation domain. To address this, aggregation (i.e. clustering) of object proposals before applying feature alignment has been proposed, as mentioned above (see reference [3] where prototypes are merged based on spatial overlap using intersection-over-union (IoU) and class labels).

In other words, there is not yet a consensus on how best to solve the domain shift problem through a UDA approach. It can also be noticed that the methods known so far certainly perform well in terms of prediction accuracy for the target domain, but these would nevertheless deserve to be further improved. Answering these challenges is of particular importance in view of the ever-increasing volume of data to be considered for training models in the best possible way.

Summary of the disclosure

The purpose of the present invention is to overcome all or some of the limitations of the prior art solutions, particularly those outlined here above, by providing an improved solution that addresses the domain shift problem, so as to obtain excellent quality label prediction over a target domain and thus allow to alleviate the high cost of acquiring and labelling training data.

To this end, and according to a first aspect, the invention relates to a computer-implemented method for training a detection model according to unsupervised domain adaptation approach, said detection being intended for object detection in images. Said training method comprising a set of steps performed for each image of at least one pair of images, the images of a pair respectively belonging to a source domain and a target domain, said domains having distinct visual distributions and sharing at least part of a same label space for objects included in said images, only the images of the source domain being labelled prior to the implementation of the method. Said set of steps associated with an image comprises:

- obtaining one or more object proposals and feature vectors for said image, said proposals and feature vectors being generated by a detection neural network,
- clustering the obtained object proposals by executing a clustering algorithm, said algorithm using a similarity measure corresponding to a distance defined as a function of the feature vectors associated with said obtained object proposals,
- determining, for each obtained cluster, a quantity representative of the feature vectors respectively associated with the object proposals belonging to said cluster.

The training method also comprises a step of learning at least one domain discriminator using adversarial training, so as to align between the source and target domains the quantities determined for each pair, said quantities being provided as input to the discriminator for the learning.

Thus, the training method according to the invention proposes clustering object proposals based on their visual similarity into varying number of clusters. Cluster representatives from the two domains (source and target domains) are then aligned by adversarial training.

Proceeding in this way brings several key benefits. First, adversarial training at cluster level enables the training method to coarsely align the main feature clusters, instead of attempting complete alignment of all instances which might be impossible.

Second, in contrast to the spatial overlap used in the art, visual similarity based clustering (with the use of the similarity measure) allows the training method to group objects which are located far away in the image, but look similar. It is noted that this still groups heavily overlapping proposals, since they tend to also be visually similar.

Additionally using visual similarity instead of class-labels removes the reliance on pseudo-labels produced by the detector head in the target domain. This is beneficial since the pseudo labels tend to be very noisy, especially in early training.

Finally, having varying number of clusters instead of single prototypes allows the training method to adaptively allocate capacity to account for intra-domain variance.

The training method according to the invention is simple to implement, and also defines a new state-of-the-art in two standard domain-shift scenarios as described below through different experimental results.

In particular embodiments, the training method may furthermore include one or more of the following features, taken alone or in any technically feasible combination.

According to particular embodiments, said detection neural network is a Faster R-CNN convolution network.

According to particular embodiments, the clustering algorithm is a hierarchical clustering algorithm, the clustering of object proposals within a cluster being carried out as long as a dissimilarity within said cluster does not exceed a cluster radius parameter, said dissimilarity being defined by a linkage function.

According to particular embodiments, the similarity measure corresponds to a cosine distance.

According to particular embodiments, the quantity determined for a cluster is equal to the mean of the feature vectors respectively associated with the object proposals belonging to said cluster.

According to particular embodiments, said at least one discriminator is learned by minimizing cross-entropy loss.

According to particular embodiments, said label space comprises class labels referring to at least one of the following type of objects: person, rider, car, truck, bus, train, motorcycle, bicycle.

According to particular embodiments, the training method further comprises an implementation of image-level alignment between source and target domains.

The inventors found that taking into account a learning stage based on image-level alignment allowed to improve even more the very good classification performances (on the target domain) already reached by the training method based on adversarial training for the discriminator and supervised detection on the source domain.

According to a second aspect, the invention also relates to a computer-implemented method for detecting objects in images, said detection method being performed using a domain discriminator trained with a training method according to the invention.

Hence, once the weights of the detection model have been conditioned through the training method (i.e. once in comparison with the model on which the detection model is based is finally trained by implementing an additional training scheme with image domain discrimination and proposal clusters discriminator), inference for detecting objects in images can be performed.

According to a third aspect, the invention also relates to a computer program including instructions for executing a training method according to the invention or a detection method according to the invention when said program is executed by a computer.

This program can use any programming language and take the form of source code, object code or a code intermediate between source code and object code, such as a partially compiled form, or any other desirable form.

According to a fourth aspect, the invention also relates to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a fifth aspect, the invention also relates to a system for training a detection model according to unsupervised domain adaptation approach, said detection model being intended for object detection in images, said system being configured to perform a training method according to the invention.

According to a sixth aspect, the invention also relates to a system for detecting objects in images, said system being configured to perform a detection method according to the invention.

Brief description of the drawings

How the present disclosure may be put into effect will now be described by way of example with reference to the appended drawings, in which:

- Figure 1 illustrates a functional architecture configured to train a network according to a general UDA approach,
- Figure 2 illustrates a particular embodiment of a training system according to the invention,
- Figure 3 illustrates an example of the hardware architecture of a training device belonging to the training system of Figure 2,
- Figure 4 is a flowchart of the main steps of a training method according to the invention,
- Figure 5 is a table showing performance results of training detection method according to the invention,
- Figure 6 is a table showing other performance results of the detection method according to the invention,
- Figure 7 is a table showing still other performance results of the detection method according to the invention,
- Figure 8 is a table showing still other performance results of the detection method according to the invention,
- Figure 9 illustrates an application example of the detection method according to the invention.

Description of the embodiments

Figure 2 illustrates a particular embodiment of a system 10 according to the invention. Said system 10 is configured to train a detection model according to UDA approach, and is referred to as "training system" hereafter. Said detection model is intended for object detection in images.

The UDA approach implemented by the training system 10 aims at managing the domain shift problem between images belonging respectively to a source domain S and to a target domain T, so as to enable efficient annotating of images of the target domain T. As shown in Figure 2, the images of the source and target domains S and T are initially stored in a database server 11 in the present embodiment.

In a conventional way (for UDA approach), said domains S, T have distinct visual distributions but also share at least part of a same label space for objects included in said images.

In the present embodiment, and for the simplicity of the description, it is considered that the domains S, T share the same label space. However, it should be noted that the invention also covers the case where there only exists an overlap between the source and target label spaces.

Moreover, only the images of the source domain S are already labelled (i.e. prior to the implementation of a training method according to the invention and described in more detail below).

For example, the images of the source domain S can be synthetic images (e.g. captures from a video game), while the images of the target domain T are representative of a real-world environment corresponding to the same type of environment encountered in the synthetic framework (urban areas, etc.).

According to another example, the images of the source domain S and the target domain T are all representative of a real-world environment. The shift between the source domain S and the target domain T can therefore result from different factors, such as for example:

- a visual filter applied to the images of the source domain S. For example, the Cityscapes dataset (see reference [4]) is used for the source domain S, and foggy version of Cityscapes (see reference [5]) is used for the target domain T. This latter is created by simulating fog with different intensity levels on every cityscapes image, and/or

- a membership to two distinct datasets. For example, the KITTI dataset (see reference [6]) is used for the source domain S, whereas the Cityscapes dataset is used for the target domain T.

These are, of course, only examples of implementation of the invention. In the end, no limitation is attached to the nature of the images belonging to the source domain S and target domain T.

Moreover, no limitation is attached to the objects intended to be detected, and thus a fortiori to the class labels that can be considered. Of course, the same annotations are shared between the source domain S and the target domain T.

By way of example, if one considers images related to an urban environment, the label space may comprise class labels referring to at least one, possibly all, of the following type of objects: person, rider (i.e. a person that is using a vehicle, but most of its body is still visible, e.g. a person riding a bicycle), car, truck, bus, train, motorcycle, bicycle.

In general, the invention can find an application in any industrial and technical field where object detection and classification tasks have to be carried out. Examples of other typical technical applications of the invention may include, without limitation, object detection in digital images for health care or autonomous driving of vehicles.

The training system 10 also comprises a training device 12 configured to perform data processing in order to address the domain shift problem between source domain S and target domain T, by implementing said training method according to UDA approach.

Similarly to what has been described for Figure 1, and according to the present embodiment, the training device 12 is based on (i.e. comprises) a Faster R-CNN convolution network.

It should be noted, however, that the invention is not limited to the use of a Faster R-CNN convolution network. Indeed, and more generally, the invention remains applicable by using any detection network capable of providing detection proposals and known to the person in the art.

Said Faster R-CNN network is conventionally composed of:

- a backbone network BBN that takes as input images belonging to the source S and target T domains,
- a Region Proposal Network RPN,
- a detection head DH.

The outputs of the RPN network correspond to object proposals which, in the embodiment described here, are represented by bounding boxes (i.e. sub-region of an image delimited by a rectangular boundary). Hence, in accordance with what has been described above, only the bounding boxes of images coming from the source domain S are annotated beforehand.

However, it should be noted that nothing excludes considering object proposals which are different from bounding boxes. For example, one may also consider polygonal segmentation, semantic segmentation, 3D cuboids, etc.

Still because UDA approach is implemented by the training device 12, the latter is also configured in a hardware and/or software manner so as to implement a learning stage which aims at minimizing the label prediction loss on the annotated part (i.e. images from the source domain S). Hence, parameters of both the Region Proposal Network RPN and the detection head DH are optimized in order to minimize the label prediction loss L_det for the source domain samples.

In general, the man skilled in the art knows how to implement such a learning stage to optimize the loss function L_det. Therefore, these aspects are not further described here.

Figure 3 illustrates an example of the hardware architecture of the training device 12 for the implementation of the training method according to the invention.

To this end, the training device 12 has the hardware architecture of a computer. As shown in Figure 3, the training device 12 comprises, in particular, a processor 1, a random access memory 2, a read-only memory 3, a non-volatile memory 4 and communication means 5.

The read-only memory 3 of the training device 12 constitutes a recording medium conforming to the invention, which is readable by processor 1 and on which is recorded a computer program PROG conforming to the invention, containing instructions for carrying out the steps of the detection method according to the invention. The program PROG defines functional modules of the training device 12, which are based on or control the aforementioned elements 1 to 5 of the training device 12, and which comprise in particular:

- a module MOD_FAST which implements the Faster R-CNN network and enables to obtain one or more object proposals and feature vectors for each image of the source S and target T domains stored in the database server 11. Said module MOD_FAST comprises three sub-modules SUB_MOD_BBN, SUB_MOD_RPN, SUB_MOD_DH respectively implementing the backbone network BBN, the Region Proposal Network RPN and the Detection Head DH,

- a first learning module MOD_LEARN1, configured to learn a classifier CLASS minimizing the label prediction loss L_det,
- a clustering module MOD_CLUST, configured to cluster the obtained object proposals by executing a hierarchical clustering algorithm, said algorithm using a similarity measure (between clusters) corresponding to a cosine distance defined as a function of the feature vectors associated with said obtained object proposals,
- a determination module MOD_DET, configured to determine, for each obtained cluster, a quantity representative of the feature vectors respectively associated with the object proposals belonging to said cluster,
- a second learning module MOD_LEARN2, configured to learn a domain discriminator DISC using adversarial training, so as to align between the source S and target T domains the quantities determined for pairs of images (the images of a pair respectively belonging to the source domain S and the target domain T), said quantities being provided as input to the discriminator DISC for the learning.

The functionalities attached to each of the modules are explained in detail later on when describing embodiments of said training method.

Nevertheless, three points should already be noted. First, the clustering module MOD_CLUST does not take into account the labels predicted by the detection head DH. In other words, and according to the invention, the clustering is class agnostic.

As a second point, the adversarial training of the discriminator DISC is of course performed by optimizing a loss function, hereafter denoted by L_disc. An expression of this loss function L_disc will be given later. However, it can be noted that this aspect substitutes for the loss function L_inst discussed before in the description of Figure 1. Similarly, the clustering operations performed by the clustering module MOD_CLUST substitutes for those discussed before in the description of Figure 1.

As a third point, and for the sake of simplicity, the training device 12 is described in the present embodiment so that it does not comprise any learning stage which aims at optimizing an image-level domain adaption loss L_img (see Figure 1 and the corresponding description). However, it is understood that is only one implementation choice for the embodiment described here, and nothing exclude considering other embodiments in which such a learning stage would be implemented in addition to the other learning stages (L_det, L_disc) already described above. Moreover, the inventors found that taking into account this learning stage based on image-level alignment allowed to improve even more the very good classification performances (on the target domain T) already reached by the model taking into account said other learning stages (L_det, L_disc).

In the present embodiment of Figure 3, the images from the source S and target T domains are stored in the database server 11, i.e. externally to the training device 12. Hence, at least part of the communication means 5 corresponds to hardware and/or software means configured to enable the training device 12 to communicate with the database server 11, so as to receive images belonging to the domains S, T. In practice, such an exchange of data between the training device 12 and the database server 11 is carried out via a communication interface. No limitation is attached to the nature of this communication interface, which may be wired or non-wired, and may implement any protocol known to the man skilled in the art (Ethernet, Wi-Fi, Bluetooth, 3G, 4G, 5G, etc.).

Of course, such an embodiment is not limiting for the invention, and nothing excludes considering other embodiments in which images of the source S and target T domains are stored in a memory of the training device 12, such as the non-volatile memory 4, prior to the execution of the training method. In such a case, at least part of the communication means 5 corresponds to hardware and/or software means configured to give processor 1 access to said stored images in order to perform steps of the training method. For example, the communication means 5 may include a computer bus connecting processor 1 to the non-volatile memory 4.

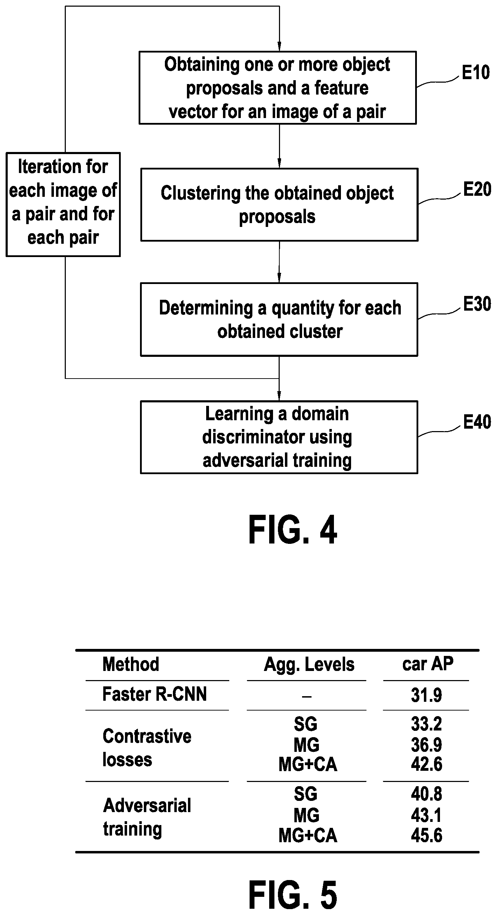

Figure 4 is a flowchart of the main steps of the training method according to the invention, these steps being carried out by the training device 12.

The training method comprises a set of steps performed for each image of at least one pair of images, the images of a pair respectively belonging to the source domain S and the target domain T. Said another way, said set of steps is implemented twice for a pair of images (i.e. once for the image belonging to the source domain S and another time for the image belonging to the target domain T), this process being repeated for each pair of images considered.

It is now described how said set of steps is implemented for an image IMA of a pair, regardless of whether this image IMA belongs to the source domain S or the target domain T.

As shown in Figure 4, said set of steps comprises a step E10 of obtaining one or more object proposals and feature vectors for said image IMA, said proposals and feature vectors being generated by the Faster R-CNN convolution network of the training device 12.

More particularly, step E10 comprises a reception of the pair to which the image IMA belongs, which is then routed to the input of the Faster R-CNN convolution network, so as to obtain feature vectors for this IMA image as well as one or more object proposals (depending on the objects detected in said IMA image). This obtaining step E10 is thus performed by the communication means 5 as well as by the module MOD_FAST of the training device 12.

Once step E10 has been performed, said set of steps comprises a step E20 of clustering the obtained object proposals. This clustering step E20 is performed by the clustering module MOD_CLUST of the training device 12.

According to the invention, the clustering of the object proposals is performed by executing a hierarchical clustering algorithm. Proceeding in this way enables to discover the main feature groups for the image IMA.

The clustering algorithm is based on a similarity measure between clusters which corresponds to a cosine distance D_cos defined as a function of the feature vectors associated with said obtained object proposals. Said cosine distance D_cos (and thus a fortiori said similarity measure) may be viewed as a distance metric between object proposals, and is typically given by:

$$D\_cos(z_i, z_j) = 1 - \frac{z_i z_j}{\|z_i\| \|z_j\|}$$

where $z_i$ (respectively $z_j$) is a feature vector associated with a first object proposal (respectively with a second object proposal) (i and j being integer indexes), and where $\|.\|$ is the Euclidean norm (i.e. L2 norm).

Hence, the clustering algorithm may be performed such that, starting bottom-up, each object proposal is considered as an individual cluster. Then, in each step of the clustering algorithm, two closest clusters according to said distance metric (i.e. the cosine distance D_cos) are merged together.

The use of said cosine distance D_cos is particularly advantageous in that, in contrast to what has been proposed in the art (see reference [3] for instance) where spatial overlap (measure by IoU) is used to group together instances, cosine similarity enables to pair instances (object proposals) which are located far from each other, but are visually similar.

Of course, the clustering of object proposals cannot be executed indefinitely. Thus, according to a particular embodiment of step E20, the clustering of object proposals within a cluster is carried out as long as dissimilarity within said cluster does not exceed a cluster radius parameter. By way of example, said cluster radius may be determined using a grid search over an interval of reasonable radii, so as to select the one that maximizes performance on a validation set.

The dissimilarity within a cluster is a function of the pairwise distance of instances in the cluster and is defined by a linkage function. Said linkage function is for example a complete linkage function MaxLink given by:

$$MaxLink(A, B) = \max\{D\_cos(a, b): a \in A, b \in B\}$$

where A and B are two sets of proposals' feature in two clusters. Such a complete linkage function MaxLink ensures that the farthest distance of two members within a cluster is smaller than said radius parameter.

Nevertheless, any linkage function known to the person skilled in the art can be used (single linkage function, complete linkage function, Ward's distance, etc.), and the choice of a particular linkage function constitutes only an alternative implementation of the invention.

In a more general way, the man skilled in the art knows how to implement a hierarchical clustering algorithm, so these aspects are not further detailed here. However, it is important to note that this hierarchical clustering approach allows the number of feature groups to be adaptively changed, instead of having a fixed number of clusters like in k-means for instance.

Although the present embodiment is described considering a hierarchical clustering algorithm, it is important to note that the training method is by no means limited to this single algorithm. Thus, any type of clustering algorithm known to the skilled person may be used.

Step 20 has also been described considering a similarity measure corresponding to a cosine distance. However, this is only a particular choice of implementation, and any other distance metric can also be considered.

Now, once step E20 has been performed, said set of steps comprises a step E30 of determining, for each obtained cluster C_i (i being an integer index), a quantity Z_C_i representative of the feature vectors respectively associated with the object proposals belonging to said cluster C_i. This determination step E30 is performed by the determination module MOD_DET of the training device 12.

By being representative of the feature vectors respectively associated with the object proposals belonging to said cluster C_i, said quantity Z_C_i can finally be seen as a representative of the cluster C_i itself.

By way of an example, the quantity Z_C_i determined for a cluster is equal to the mean of the feature vectors respectively associated with the object proposals belonging to said cluster. In other words, using the notations used above to describe the cosine distance D_cos, said quantity Z_C_i is given by:

$$Z\_C\_i = \frac{1}{N\_C\_i} \times \sum_{i}^{N\_C\_i} z_i$$

where N_C_i is the number of instances assigned in (i.e. the number of object proposals contained to) the cluster C_i.

It should be noted that other examples of the quantity Z_C_i can be considered for each cluster C_i. For example, the median, the L2 norm (or any Lp norm), or any equivalent quantity (for instance, adding a constant to any of the quantities above) can be considered. Weighted version of these quantities can also be considered, where different samples have different importance, or different features in the feature vectors have different importance.

Let us now consider that the steps E10, E20 and E30 have been performed for the images of a plurality of pairs. It is understood that these steps may be executed sequentially for each image of a pair (in any order, e.g. for an image of the source domain S in the first instance), or, as an alternative, in parallel.

Thus, the training method comprises a step E40 of learning a domain discriminator DISC using adversarial training. This learning step E40 is performed by the second learning module MOD_LEARN2 of the training device 12.

According to the invention, this adversarial training is more particularly implemented so as to align, between the source S and target T domains, the quantities Z_C_i determined for each pair (according to the steps E30 performed for each of the images in the pair), said quantities being provided as input to the discriminator DISC for the learning.

Hence, the discriminator DISC is configured to predict to which domain the input quantity Z_C_i belongs.

By implementing adversarial training, the UDA approach is cast here as a minimax game between domain classification and feature learning. In this way, a neural network learns features that are, at the same time, as discriminative as possible in the source domain S and as indistinguishable as possible among the source S and the target T domains. In other words, at training time of the discriminator DISC, and in order to obtain domain-invariant features, one seeks the parameters of the feature mapping that maximize the loss of the discriminator DISC (by making the two feature distributions S, T as similar as possible), while simultaneously seeking the parameters of the discriminator DISC that minimize the loss of the discriminator DISC.

According to a particular embodiment, the discriminator DISC is trained by minimizing cross-entropy loss. In this way, the loss function L_disc is given by:

$$L\_disc = -\mathrm{d} \times \log\big(DISC(Z\_C\_i)\big) - (1-d) \times \log\big(1 - DISC(Z\_C\_i)\big)$$

where d is a parameter which equals to 0 or 1 for respectively the source domain S and the target domain T.

It should be observed that, since the features have to be adapted so as to be indistinguishable (between the source S and target T domains) to the discriminator DISC, the loss function L_disc as to be maximized with respect to the quantity Z_C_i. This can be achieved, for example, by incorporating a gradient reverse layer before quantities Z_C_i are input to the discriminator DISC (see reference [7]).

Of course, it should be remembered that, in accordance with the principle of the UDA approach for object detection, the learning of the DISC discriminator is performed in conjunction with the learning of the label classifier CLASS (the one associated with the L_det loss function, said training being performed by the first learning module MOD_LEARN1), so as to take into account a general objective formulated with L_det and L_disc.

By way of a typical example, the label classifier CLASS used in the source domain S is a fully-connected network followed by a softmax over the categories (as in standard supervised learning).

The invention has been described so far considering that the training method includes a step during which an image of a pair is processed by the Faster R-CNN convolution network to obtain one or more object proposals as well as feature vectors (step E10). Nevertheless, it remains possible to envisage other embodiments in which the object proposal(s) and feature vector(s) are generated prior to the implementation of the training method, and stored in a memory (for example a memory of the training device 12, or in the database server 11, or in a memory of another device). In such a case, the obtaining step E10 refers to the transmission of said data (object proposal(s) and feature vector) from said memory so that they can then be the processed through the other steps of the training method.

It is also important to note that the training method according to the invention is generalizable to the case where several discriminators are learned. The man skilled in the art knows how to implement such a generalization.

The invention has also been described so far in terms of said training method and the system 10 configured to implement it. However, the invention is not limited to these objects, and also covers a method for detecting objects in images, this detection method being implemented using the detection model trained according to said training method.

Correspondingly, the invention also covers a system configured to implement this detection method, referred to as "detection system".

In a similar way to what has been described for the training system 10, the detection system may comprise a detection device having the hardware architecture of a computer. Said detection device may comprise, in particular, a processor, a random access memory, a read-only memory, a non-volatile memory and communication means. The read-only memory of the detection device constitutes a recording medium conforming to the invention, which is readable by said processor and on which is recorded a computer program conforming to the invention, containing instructions for carrying out the steps of the detection method according to the invention.

Several experimental results are now described to assess the effectiveness of the detection method according to the invention.

In these results, two domain shift scenarios are considered:

- Adverse Weather (Normal to Foggy): in this scenario, the Cityscapes dataset (see reference [4]) is used for the source domain S. Foggy version of Cityscapes dataset (see reference [5]) is used for the target domain T. Highest fog intensity (least visibility) images are used in the experiments. Both Cityscapes and Foggy datasets have 8 different categories including person, rider, car, truck, bus, train, motorcycle and bicycle and share the same annotations. Moreover, the tightest bounding box of an instance segmentation mask is used as ground truth box. This is scenario referred to as Foggy in rest of the description.
- Synthetic to Real world: SIM10k (see reference [8]) is a simulated dataset that contains 10,000 synthetic images generated by a gaming engine called Grand Theft Auto (GTAV). In this dataset, all 58,701 car bounding boxes available are used for the source domain S during training. For the target domain T and evaluation, Cityscapes dataset is used, only the car instances begin considered. This is scenario referred to as Sim2Real.

Regarding the implementation details, all experiments are performed using mean average precision (mAP) with IoU threshold of 0.5 for evaluation. The shorter side of an image is set to 600 pixels following the Faster R-CNN implementation indicated in reference [1]. Moreover, the Faster R-CNN convolutional network implemented by the training method according to the invention is based on ResNet-50 as the backbone network BBN.

Some of the results detailed hereafter aim at comparing adversarial training models again contrastive training models. Models using adversarial training are first trained with learning rate 0.001 for 50K iterations, and then with learning rate 0.0001 for 20K more iterations. Each batch (i.e. a pair of images according to the invention) is composed of 2 images, one from each domain S, T. A momentum of 0.9 and a weight decay of 0.0005 are used. For training contrastive learning models, the code provided in reference [3] is used. Finally, both methods (adversarial, contrastive) are implemented with the PyTorch library.

Figure 5 is a table showing performance results of the detection method according to the invention.

More particularly, in Figure 5, contrastive learning (CL) and adversarial training (AT) domain alignment paradigms are compared in the Sim2Real scenario. To set a baseline, the first row shows the result for a Faster R-CNN model which is only trained on the source domain S and tested on the target domain T. The effectiveness of CL and AT alignment mechanisms are compared on three different models with trying to align different number and types of groups.

In the second row, CL is used to align one class-specific group representative vector across the two domains (referred to as "SG" for "Single Group"), improving the performance by +%1.3 over the source-only model. Similarly applying CL to induce alignment of multiple class-specific groups (referred to as "MG" for "Multiple Group") in the third row (36.9) or multiple class-agnostic groups (referred to as "MG + CA" for "Multiple Group Class Agnostic") in the fourth row (42.6) also further improves the model performance.

However, AT handily outperforms contrastive learning in each of these three scenarios (i.e. SG, MG, MG+CA), as seen in the results presented in fifth to seventh rows of Figure 5. For example, on applying AT on single group alignment in the fifth row the gain is much higher (+%8.9 vs Faster R-CNN). Similarly, AT on multiple groups in row six heavily outperforms CL on multiple groups (43.1 vs 36.9). Same trend is observed in class agnostic groups as well, with AT outperforming CL (45.6 vs 42.6).

This large margin reveals that allowing the network to freely align the group representatives with adversarial training, leads to more performance gain compared to explicitly matching the groups to nearest neighbours across domains using contrastive learning.

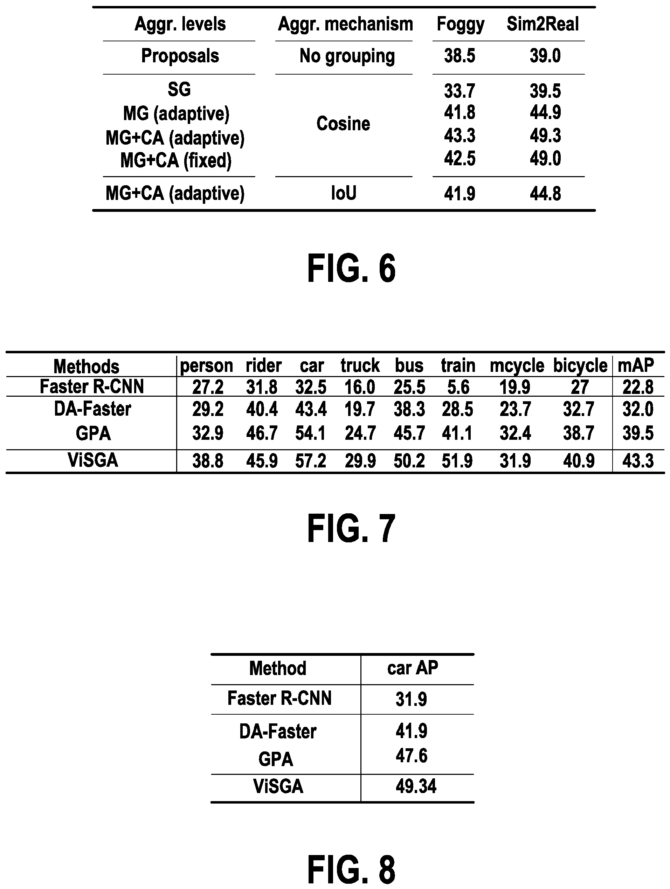

Figure 6 is a table showing other performance results of the detection method according to the invention.

More particularly, in Figure 6, the process of aggregating instance proposals into groups before performing alignment is assessed. Effects of both number of groups as well as the mechanism used to aggregate proposals into groups are studied. The results are presented on the scenarios Sim2Real and Foggy.

It should be noted that all experiments of Figure 6 use AT (adversarial training) framework, as well as image-level alignment in addition of instance-level alignment. Moreover, both MG (adaptive) and MG+CA (adaptive) use cluster radius parameter to let the model vary the number of groups adaptively over the course of training (acronyms SG, MG and MG+CA have been previously defined with reference to Figure 5).

First row of Figure 6 shows results using original proposals without any grouping for the instance level alignment. In second row, one can see that aggregating instances into a single group per category (i.e. SG model) causes a big drop in performance. However, clustering the instances (i.e. object proposals) into multiple groups for each class, based on visual similarity using cosine distance D_cos is beneficial. It improves over the no aggregation model on both the datasets as seen in third row (41.8 vs 38.5 on Foggy and 44.9 vs 39.0 on Sim2real).

Performance is further improved by ignoring the predicted class-label, and just using visual similarity to create the groups. This model (MG+CA (adaptive)) corresponds to the one implemented by the invention, and clearly outperforms other configurations (43.3 on Foggy and 49.3 on Sim2Real). This result shows that noisy pseudo labels can be harmful to the clustering process.

Fifth row of Figure 6 also shows experiment with fixing the number of clusters (MG+CA (fixed) model). More precisely, a sweep of the number of clusters hyper-parameter is performed and the best numbers is reported in Figure 6. This model MG+CA (fixed) performs slightly worse than MG+CA (adaptive), indicating that the flexibility from adaptive number of clusters is beneficial.

Finally, in the last row of Figure 6, performance using spatial overlap (i.e. using IoU) to cluster instances is reported for MG+CA (adaptive) model. As shown, the performance drops by 1.4% and 4.5% on Foggy and Sim2Real respectively, compared to using visual similarity based clustering (MG+CA (adaptive) with cosine distance D_cos).These large drops show that visual similarity based grouping is a better mechanism to accumulates proposals, since it allows grouping distant instances and avoids redundant group representatives.

Figure 7 is a table showing still other performance results of the detection method according to the invention.

More particularly, in Figure 7, the detection method according to the invention is compared to prior work on cross-domain detection in the Foggy scenario. AT (adversarial training) framework is used, as well as image-level alignment in addition of instance-level alignment.

As can be seen in Figure 7, the detection method according to the invention (referred to as "VISGA", i.e. "Visually Similar Group Alignment") shows a significant improvement compared to the other state-of-the-art methods on most object categories and, as a result, achieves a new state-of-the-art overall performance.

Indeed, it handily outperforms the GPA method ("GPA" stands for "Graph-induced Prototype Alignment") described in reference [3] (43.3 vs 39.5), highlighting the importance of the choices made for the invention (i.e. multiple similarity based class-agnostic groups and adversarial training). One can also observe that the overall difference in performance between the invention and the DA-Faster method ("DA-Faster" stands for "Domain Alignment Faster") used in reference [2] is even greater (43.3 vs 32.0).

Figure 8 is a table showing still other performance results of the detection method according to the invention.

More particularly, in Figure 8, the detection method according to the invention is compared to prior work (DA-Faster method of reference and GPA method of reference [3]) on cross-domain detection in the Sim2Real scenario. AT (adversarial training) framework is used, as well as image-level alignment in addition of instance-level alignment.

The adaption is challenging on Sim2Real due to relatively large domain shift between source S and target T domains. However, as shown in Figure 8, the detection method according to the invention (ViSGA) outperforms other methods with a fair margin (49.34 vs 47.6 by the closest model, GPA).

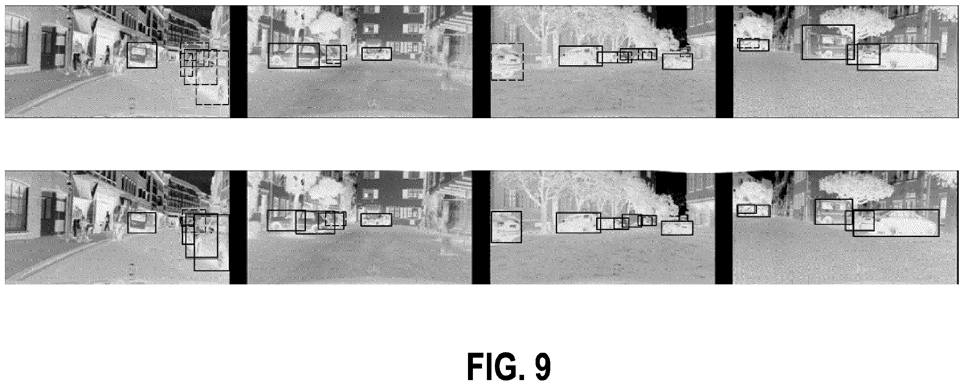

Figure 9 illustrates an application example of the detection method according to the invention.

More particularly, in Figure 9, the detection output of a Faster R-CNN model (i.e. a Faster R-CNN model which is only trained on the source domain S and tested on the target domain T) is compared with the output obtained thank to the detection method according to the invention. Objects (i.e. cars here) correctly detected are represented by a continuous line box whereas missed objects are represented by a hatched line box.

As shown in Figure 9, the Faster R-CNN model (first row of images) misses many objects. In comparison, results are improved with the invention implementing similarity-based aggregation (second row of images), almost all missed objects being recovered.

References:

[1] "Faster R-CNN: Towards Real-Time Object Detection with Region Proposal Networks", Shaoqing Ren, Kaiming He, Ross Girshick, and Jian Sun, in Advances in neural information processing systems, pages 91-99, 2015.

[2] "Domain adaptive faster R-CNN for object detection in the wild", Yuhua Chen, Wen Li, Christos Sakaridis, Dengxin Dai, and Luc Van Gool, in IEEE Conference on Computer Vision and Pattern Recognition, 2018.

[3] "Cross-domain detection via graph-induced prototype alignment", Minghao Xu, Hang Wang, Bingbing Ni, Qi Tian, and Wenjun Zhang, in Proceedings of the IEEE/CVF Conference on Computer Vision and Pattern Recognition, pages 12355-12364, 2020.

[4] "The cityscapes dataset for semantic urban scene understanding", Marius Cordts, Mohamed Omran, Sebastian Ramos, Timo Rehfeld, Markus Enzweiler, Rodrigo Benenson, Uwe Franke, Stefan Roth, and Bernt Schiele, in IEEE Conference on Computer Vision and Pattern Recognition, 2016.

[5] "Semantic foggy scene understanding with synthetic data", Christos Sakaridis, Dengxin Dai, and Luc Van Gool, International Journal of Computer Vision, 126(9):973-992, 2018.

[6] "Are we ready for autonomous driving? the KITTI vision benchmark suite", Andreas Geiger, Philip Lenz, and Raquel Urtasun, in IEEE Conference on Computer Vision and Pattern Recognition, 2012.

[7] "Unsupervised domain adaptation by backpropagation", Yaroslav Ganin and Victor Lempitsky, in International conference on machine learning, pages 1180-1189, 2015.

[8] "Driving in the matrix: Can virtual worlds replace human generated annotations for real world tasks?", Matthew Johnson-Roberson, Charles Barto, Rounak Mehta, Sharath Nittur Sridhar, Karl Rosaen, and Ram Vasudevan, in IEEE International Conference on Robotics and Automation, 2017.

**Claims**

1. A computer-implemented method for training a detection model according to unsupervised domain adaptation approach, said detection model being intended for object detection in images, said method comprising a set of steps performed for each image of at least one pair of images, the images of a pair respectively belonging to a source domain and a target domain, said domains having distinct visual distributions and sharing at least part of a same label space for objects included in said images, only the images of the source domain being labelled prior to the implementation of the method, said set of steps associated with an image comprising:

   - obtaining (E10) one or more object proposals and feature vectors for said image, said proposals and feature vectors being generated by a detection neural network,
   - clustering (E20) the obtained object proposals by executing a clustering algorithm, said algorithm using a similarity measure corresponding to a distance defined as a function of the feature vectors associated with said obtained object proposals,
   - determining (E30), for each obtained cluster, a quantity representative of the feature vectors respectively associated with the object proposals belonging to said cluster,

   the method also comprising a step of learning (E40) at least one domain discriminator using adversarial training, so as to align between the source and target domains the quantities determined for each pair, said quantities being provided as input to the discriminator for the learning.

2. The method according to claim 1, wherein said detection neural network is a Faster R-CNN convolution network.

3. The method according to any one of claims 1 to 2, wherein the clustering algorithm is a hierarchical clustering algorithm, the clustering (E20) of object proposals within a cluster being carried out as long as a dissimilarity within said cluster does not exceed a cluster radius parameter, said dissimilarity being defined by a linkage function.

4. The method according to any one of claims 1 to 3, wherein the similarity measure corresponds to a cosine distance.

5. The method according to any one of claims 1 to 4, wherein the quantity determined for a cluster is equal to the mean of the feature vectors respectively associated with the object proposals belonging to said cluster.

6. The method according to any one of claims 1 to 5, wherein said at least one discriminator is learned by minimizing cross-entropy loss.

7. The method according to any one of claims 1 to 6, wherein said label space comprises class labels referring to at least one of the following type of objects: person, rider, car, truck, bus, train, motorcycle, bicycle.

8. The method according to any one of claims 1 to 7, said method further comprising an implementation of image-level alignment between source and target domains.

9. A computer-implemented method for detecting objects in images, said detection method being performed using a detection model trained with a training method according to any one of claims 1 to 8.

10. A computer program including instructions for executing a training method according to any one of claims 1 to 8 or a detection method according to claim 9 when said program is executed by a computer.

11. A recording medium readable by a computer and having recorded thereon a computer program according to claim 10.

12. A system (10) for training a detection model according to unsupervised domain adaptation approach, said detection model being intended for object detection in images, said system being configured to perform a training method according to any of claims 1 to 8.

13. A system for detecting objects in images, said system being configured to perform a detection method according to claim 9.

**FIG. 1**

**FIG. 2**

**FIG. 3**

**FIG. 4**

| Method | Agg. Levels | car AP |
|---|---|---|
| Faster R-CNN | – | 31.9 |
| Contrastive losses | SG | 33.2 |
| | MG | 36.9 |
| | MG+CA | 42.6 |
| Adversarial training | SG | 40.8 |
| | MG | 43.1 |
| | MG+CA | 45.6 |

**FIG. 5**

| Aggr. levels | Aggr. mechanism | Foggy | Sim2Real |
|---|---|---|---|
| Proposals | No grouping | 38.5 | 39.0 |
| SG | Cosine | 33.7 | 39.5 |
| MG (adaptive) | | 41.8 | 44.9 |
| MG+CA (adaptive) | | 43.3 | 49.3 |
| MG+CA (fixed) | | 42.5 | 49.0 |
| MG+CA (adaptive) | IoU | 41.9 | 44.8 |

# FIG. 6

| Methods | person | rider | car | truck | bus | train | mcycle | bicycle | mAP |
|---|---|---|---|---|---|---|---|---|---|
| Faster R-CNN | 27.2 | 31.8 | 32.5 | 16.0 | 25.5 | 5.6 | 19.9 | 27 | 22.8 |
| DA-Faster | 29.2 | 40.4 | 43.4 | 19.7 | 38.3 | 28.5 | 23.7 | 32.7 | 32.0 |
| GPA | 32.9 | 46.7 | 54.1 | 24.7 | 45.7 | 41.1 | 32.4 | 38.7 | 39.5 |
| ViSGA | 38.8 | 45.9 | 57.2 | 29.9 | 50.2 | 51.9 | 31.9 | 40.9 | 43.3 |

# FIG. 7

| Method | car AP |
|---|---|
| Faster R-CNN | 31.9 |
| DA-Faster | 41.9 |
| GPA | 47.6 |
| ViSGA | 49.34 |

# FIG. 8

FIG. 9

Europäisches
Patentamt

European
Patent Office

Office européen
des brevets

# EUROPEAN SEARCH REPORT

Application Number

EP 21 18 5912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHU XINGE ET AL: "Adapting Object Detectors via Selective Cross-Domain Alignment", 2019 IEEE/CVF CONFERENCE ON COMPUTER VISION AND PATTERN RECOGNITION (CVPR), IEEE, 15 June 2019 (2019-06-15), pages 687-696, XP033686343, DOI: 10.1109/CVPR.2019.00078 [retrieved on 2020-01-08] * abstract; figure 2 * * sec. 3.2 * | 1-13 | INV. G06K9/62 |
| A | XU MINGHAO ET AL: "Cross-Domain Detection via Graph-Induced Prototype Alignment", 2020 IEEE/CVF CONFERENCE ON COMPUTER VISION AND PATTERN RECOGNITION (CVPR), IEEE, 13 June 2020 (2020-06-13), pages 12352-12361, XP033805611, DOI: 10.1109/CVPR42600.2020.01237 [retrieved on 2020-08-03] * the whole document * | 1-13 | |
| A | ZHENG YANGTAO ET AL: "Cross-domain Object Detection through Coarse-to-Fine Feature Adaptation", 2020 IEEE/CVF CONFERENCE ON COMPUTER VISION AND PATTERN RECOGNITION (CVPR), IEEE, 13 June 2020 (2020-06-13), pages 13763-13772, XP033804735, DOI: 10.1109/CVPR42600.2020.01378 [retrieved on 2020-08-03] * the whole document * | 1-13 | TECHNICAL FIELDS SEARCHED (IPC) G06K |

The present search report has been drawn up for all claims

| Place of search | Date of completion of the search | Examiner |
|---|---|---|
| The Hague | 16 December 2021 | Mitzel, Dennis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHAOQING REN ; KAIMING HE ; ROSS GIRSHICK ; JIAN SUN.** Faster R-CNN: Towards Real-Time Object Detection with Region Proposal Networks. *Advances in neural information processing systems,* 2015, 91-99
- **YUHUA CHEN ; WEN LI ; CHRISTOS SAKARIDIS ; DENGXIN DAI ; LUC VAN GOOL.** Domain adaptive faster R-CNN for object detection in the wild. *IEEE Conference on Computer Vision and Pattern Recognition,* 2018
- **MINGHAO XU ; HANG WANG ; BINGBING NI ; QI TIAN ; WENJUN ZHANG.** Cross-domain detection via graph-induced prototype alignment. *Proceedings of the IEEE/CVF Conference on Computer Vision and Pattern Recognition,* 2020, 12355-12364
- **MARIUS CORDTS ; MOHAMED OMRAN ; SEBASTIAN RAMOS ; TIMO REHFELD ; MARKUS ENZWEILER ; RODRIGO BENENSON ; UWE FRANKE ; STEFAN ROTH ; BERNT SCHIELE.** The cityscapes dataset for semantic urban scene understanding. *IEEE Conference on Computer Vision and Pattern Recognition,* 2016
- **CHRISTOS SAKARIDIS ; DENGXIN DAI ; LUC VAN GOOL.** Semantic foggy scene understanding with synthetic data. *International Journal of Computer Vision,* 2018, vol. 126 (9), 973-992
- **ANDREAS GEIGER ; PHILIP LENZ ; RAQUEL URTASUN.** Are we ready for autonomous driving? the KITTI vision benchmark suite. *IEEE Conference on Computer Vision and Pattern Recognition,* 2012
- **YAROSLAV GANIN ; VICTOR LEMPITSKY.** Unsupervised domain adaptation by backpropagation. *International conference on machine learning,* 2015, 1180-1189
- **MATTHEW JOHNSON-ROBERSON ; CHARLES BARTO ; ROUNAK MEHTA ; SHARATH NITTUR SRIDHAR ; KARL ROSAEN ; RAM VASUDEVAN.** Driving in the matrix: Can virtual worlds replace human generated annotations for real world tasks?. *IEEE International Conference on Robotics and Automation,* 2017